# EUROPEAN PATENT APPLICATION

(11) **EP 4 215 347 A1**
(43) Date of publication of application: **26.07.2023**
(21) Application number: 22382043.2
(22) Date of filing: 21.01.2022
(51) Int. Cl.: B29C 70/08, B29C 70/22, B29C 70/20, B29C 70/88

(54) **HYBRID UNIDIRECTIONAL AND BRAIDED COMPOSITE LAMINATES, AND RELATED METHODS**

(71) Applicant: The Boeing Company, Arlington, VA 22202 (US)
(72) Inventor: MARTÍN, Pedro Pablo, 28042 Madrid (ES); OGALE, Amol, Chicago, IL 60606-2016 (US); RUBIN, Alexander, Chicago, IL 60606-2016 (US); WILKERSON, Randall D., Chicago, IL 60606-2016 (US)
(74) Representative: ZBM Patents - Zea, Barlocci & Markvardsen

(57) **Abstract**

At least one braided composite layer configured to form a first ply (12, 12') may be provided. A plurality of slit tapes (16) may be arranged and aligned such that each slit tape is adjacent to one another and non-overlapping, to form a second ply (14). A hybrid composite laminate (10) may be formed by stacking a plurality of plies that includes at least one first ply and at least one second ply. Each slit tape may be a steered unidirectional composite slit tape that is aligned along an axis, contour line, or curve of the hybrid composite laminate, a mold/tooling used to shape the laminate, or the resulting composite part. Hybrid composite laminates may be formed by stacking at least one first ply formed of a braided composite layer and at least one second ply formed from a plurality of slit tapes. Composite parts may be formed by consolidating such hybrid composite laminates.

## Description

### FIELD

The present disclosure relates generally to hybrid composite laminates and more particularly to composite laminates formed from both steered unidirectional slit tapes and braided composite layers.

### BACKGROUND

Fiber-reinforced thermoplastic composite structures and parts are often used in a wide variety of industries and applications, such as in aircraft, spacecraft, rotorcraft, watercraft, automobiles, trucks, and/or other vehicles and structures. Woven fiber fabrics are formed by orthogonal interlacing of yarns, though many of these applications require the formation of curved and/or complex composite structures which are difficult to achieve with woven fabrics. Some applications utilize braided composites formed from fibers that are braided, by being intertwined and/or diagonally crossed over each other in various patterns. For example, continuous fiber tows (referred to herein as slit tapes) may be drawn from a plurality of carriers to create a braid of continuous, mechanically interlocked fibers having two or three (or more) different nonorthogonal orientations, resulting in a braided tube. In some cases, a shaped tube is over-braided (in which several braided plies are layered onto one another) on a solid mandrel to form a lay-up of multiple plies with various fiber angles. The number of braided plies, fiber angles and sequences are defined depending on the part requirements. The braided tube is often cut and then used to form a lay-up stack, which is further consolidated to form the final part, such as by draping and stamp forming. However, the resulting parts may be wrinkled and/or heavier than desired due to conventional manufacturing techniques.

### SUMMARY

Within examples, methods according to the present disclosure include providing at least one braided composite layer configured to form a first ply, arranging and aligning a plurality of slit tapes such that each slit tape of the plurality of slit tapes is adjacent to one another and non-overlapping, thereby forming a second ply, and forming a hybrid composite laminate by stacking a plurality of plies. In such methods, each slit tape may be a steered unidirectional composite slit tape, and the plurality of plies includes at least one first ply and at least one second ply.

Within examples, presently disclosed hybrid composite laminates include at least one braided composite layer that forms a first ply, and a plurality of slit tapes that collectively form a second ply. Each slit tape may be a steered unidirectional composite slit tape, and each slit tape may be arranged and aligned adjacent to one another such that they are non-overlapping. At least one first ply and at least one second ply may be stacked together to form the hybrid composite laminate. Composite parts formed by consolidating such hybrid composite laminates also are disclosed.

### BRIEF DESCRIPTION OF THE DRAWINGS

Fig. 1 is a schematic flowchart diagram representing non-exclusive methods according to the present disclosure.
Fig. 2 is a schematic cross-sectional representation of non-exclusive examples of presently disclosed hybrid composite laminates.
Fig. 3 is a schematic cross-sectional representation of an example of presently disclosed hybrid composite laminates.
Fig. 4 is a top plan schematic representation of a portion of a presently disclosed hybrid composite laminate.
Fig. 5 is a top plan schematic representation of a plurality of steered unidirectional slit tapes arranged and aligned with respect to each other along a curve or contour line of a part.
Fig. 6 is a schematic cross-sectional representation of an example of presently disclosed hybrid composite laminates.
Fig. 7 is a perspective view of a portion of an example of presently disclosed hybrid composite laminates.

### DESCRIPTION

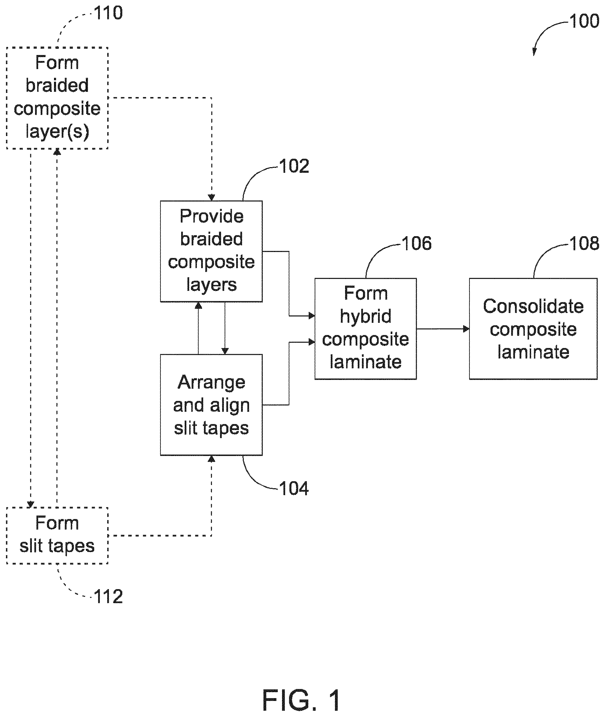

Fig. 1 schematically provides a flowchart that represents illustrative, non-exclusive examples of methods 100 of forming a hybrid composite laminate according to the present disclosure. In Fig. 1, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 1 are not limiting and other methods and steps are within the scope of the present disclosure, including methods having greater than or fewer than the number of steps illustrated, as understood from the discussions herein.

Methods 100 of forming a hybrid composite laminate generally include providing at least one braided composite layer at 102, and arranging and aligning a plurality of slit tapes at 104. The braided composite layer provided at 102 is configured to form a first ply, while the plurality of slit tapes are arranged and aligned together at 104 to form a second ply. Methods 100 further include forming the hybrid composite laminate at 106 by stacking a plurality of plies, including at least the first ply (i.e., the braided composite layer provided at 102) and the second ply (i.e., the plurality of slit tapes aligned and arranged at 104). Forming the hybrid composite laminate at 106 generally includes stacking a plurality of first plies and a plurality of second plies (and/or one or more other plies of material), as will be described in detail herein.

The plurality of slit tapes are arranged and aligned at 104 such that the slit tapes are adjacent to one another and non-overlapping, thereby together forming the second ply. In disclosed methods 100, each slit tape of the plurality of slit tapes may be a steered unidirectional composite slit tape. Arranging and aligning the plurality of slit tapes at 104 includes aligning each respective slit tape along a respective contour line, part axis, curve, and/or radius of curvature of the hybrid composite laminate, a tooling used to form a composite part from the hybrid composite laminate, a mold used to form the composite part, and/or the resulting composite part. Specifically, the arranging and aligning the plurality of slit tapes at 104 may involve arranging and aligning each respective slit tape along a respective tape path that corresponds to a respective contour line, part axis, and/or curve of the hybrid composite laminate, the tooling, the mold, and/or the resulting composite part. Depending on the part and process design, the curvature of an initial hybrid composite laminate may be different from that of the tool or mold, and/or different from that of a final composite part. As used herein, "contour lines" may be defined as lines that trace a constant distance from a surface to a given plane.

Such methods 100 may be particularly well-suited for forming curved composite laminates (and thereby, curved composite parts, once the hybrid composite laminate is consolidated, or cured). As such, methods 100 also may include consolidating the hybrid composite laminate, at 108, to form the resulting composite part. In some examples, consolidating the hybrid composite laminate at 108 includes draping the hybrid composite laminate onto, into, or over a mold or tooling, and stamp forming the composite part. In some examples, consolidating the hybrid composite laminate at 108 includes over-braiding several braided plies onto one another on a solid mandrel to form a lay-up of multiple first plies with a variation in fiber angles. In some examples, consolidating the hybrid composite laminate at 108 includes autoclave consolidation, press forming, and/or other modes of consolidation. The number of first plies, the number of second plies, the fiber angles of the first and second plies, and the sequence of first plies and second plies in a given hybrid composite laminate may be defined or determined depending on the part requirements of the resulting composite part.

Methods 100 may include forming the braided composite layer (or layers), at 110. For example, forming the braided composite layer at 110 may include braiding a plurality of fiber tows to form a braided tube via a body of revolution, and cutting the resulting braided tube to form the at least one braided composite layer. In some examples, forming the braided composite layer at 110 includes cutting the braided tube into two hemispheres, and flattening each respective hemisphere to form a respective braided composite layer. Forming the braided composite layers via cutting the braided tube in half can help reduce wrinkles in the braided composite layer. The braided tubes may have any suitable cross-sectional shape, such as a circular, square, elliptical, polygonal, or rectangular cross-section. Such forming of the braided composite layer at 110 may be performed a plurality of times to form a plurality of braided composite layers, which may then serve as a plurality of first plies to be incorporated into one or more hybrid composite laminates according to the present disclosure. Similarly, methods 100 may include forming the plurality of slit tapes, at 112.

The plurality of slit tapes may be arranged and aligned at 104 in many different ways in various versions of methods 100. For example, arranging and aligning the plurality of slit tapes at 104 may include aligning each respective slit tape along a part axis of the hybrid composite laminate, mold, tooling, or resulting part, and/or aligning the plurality of slit tapes along a curve or contour line of the hybrid composite laminate, mold, tooling, or resulting part. In some examples, arranging and aligning the plurality of slit tapes at 104 includes arranging and aligning at least one slit tape of the plurality of slit tapes along a first curve or contour of the hybrid composite laminate, and arranging and aligning at least one other slit tape of the plurality of slit tapes along a second curve or contour of the hybrid composite laminate. Additionally or alternatively, arranging and aligning the plurality of slit tapes at 104 may include arranging and aligning at least one slit tape in a first plane and arranging and aligning at least one other slit tape in a second plane, with the second plane intersecting the first plane.

In some methods 100, each respective slit tape of the plurality of slit tapes that are arranged and aligned at 104 has a respective tape width, which may be substantially uniform among the plurality of slit tapes. In some methods 100, the plurality of slit tapes may have varying respective tape widths. The tape width or various tape widths of the plurality of slit tapes may be less than 50% of a braided layer width of the first ply of the braided composite layer, less than 40% of the braided layer width, less than 30% of the braided layer width, less than 20% of the braided layer width, and/or less than 10% of the braided layer width.

The hybrid composite laminate may be formed at 106 by alternating layers of the first ply and the second ply in some examples. In some examples, the hybrid composite laminate may be formed at 106 by stacking one or more layers of the first ply, and then layering one or more layers of the second ply, followed by one or more layers of the first ply, and so on. In some examples, forming the hybrid composite laminate at 106 includes positioning at least one second ply interspersed among a plurality of stacked first plies. Additionally or alternatively, forming the hybrid composite laminate at 106 may include positioning at least one first ply interspersed among a plurality of stacked second plies.

In some methods 100, arranging and aligning the plurality of slit tapes at 104 includes optimizing reinforcement along a part axis of the hybrid composite laminate. For example, one or more layers of slit tapes may be applied along one or more part axes, curves, or contour lines of the hybrid composite laminate (and/or the resulting composite part formed after consolidating the hybrid composite laminate) to increase or decrease reinforcement in certain areas, as desired. In some examples, each respective slit tape of the plurality of slit tapes in a given hybrid composite laminate has a respective tape length that is less than an overall length of the hybrid composite laminate. Thus, the forming the hybrid composite laminate at 106 can include locally inserting one or more second plies among a plurality of first plies, such that each second ply forms a partial layer of the hybrid composite laminate.

In some examples, forming the composite laminate at 106 includes increasing the stiffness in one or more respective areas of the hybrid composite laminate via placement of the second ply and/or a plurality of second plies. For example, a higher number of second plies can be positioned in areas of the hybrid composite laminate where increased stiffness is desired or needed, and fewer layers of the second ply (e.g., the slit tapes) can be placed in areas where less stiffness is needed, which can save on weight and cost of the resulting part. In other words, additional slit tape layers can be placed and positioned to reinforce subsections of the hybrid composite laminate during formation at 106. Additionally or alternatively, one or more first plies and/or one or more second plies can be stacked in different orientations when forming the hybrid composite laminate at 106. For example, forming the hybrid composite laminate at 106 can include layering an initial first ply in a first orientation and layering a subsequent first ply in a second orientation.

In some examples, the hybrid composite laminate includes one or more flanges, one or more vertical sides, and/or one or more horizontal sides. Arranging and aligning the plurality of slit tapes at 104 can thus include arranging and aligning at least one slit tape on one or more flanges, arranging and aligning at least one slit tape on one or more vertical sides, and/or arranging and aligning at least one slit tape on one or more horizontal sides. In various examples of methods 100, arranging and aligning the plurality of slit tapes at 104 may be performed using an automated fiber placement system and/or a pick and place machine.

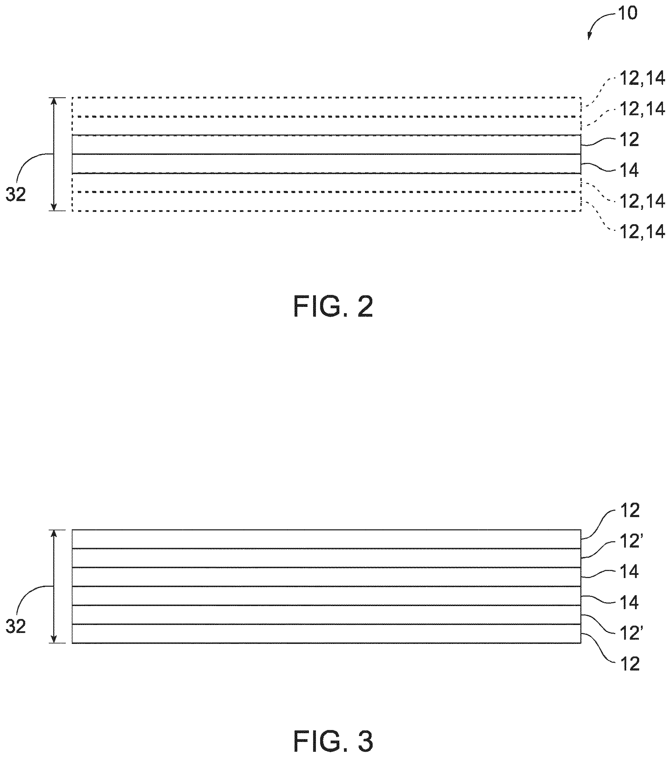

Figs. 2-6 provide illustrative, non-exclusive examples of hybrid composite laminates 10 according to the present disclosure. Elements that serve a similar, or at least substantially similar, purpose are labeled with like numbers in each of Figs. 2-6, and these elements may not be discussed in detail herein with reference to each of Figs. 2-6. Similarly, all elements may not be labeled in each of Figs. 2-6, but reference numerals associated therewith may be utilized herein for consistency. Elements, components, and/or features that are discussed herein with reference to one or more of Figs. 2-6 may be included in and/or utilized with any of Figs. 2-6 without departing from the scope of the present disclosure. In general, elements that are likely to be included in a given (i.e., a particular) example are illustrated in solid lines, while elements that are optional to a given example are illustrated in dashed lines. However, elements that are shown in solid lines are not essential to all examples, and an element shown in solid lines may be omitted from a particular example without departing from the scope of the present disclosure.

Fig. 2 schematically represents a cross-sectional view of a hybrid composite laminate 10, which consists of a plurality of layers stacked together to form the hybrid composite laminate 10. For example, hybrid composite laminate 10 includes at least one first ply 12 and at least one second ply 14. Each first ply 12 may be formed of a braided composite layer, and each second ply 14 may be formed of a plurality of slit tapes 16. Hybrid composite laminate 10 may include any number of desired layers, which may include any number of first plies 12 and any number of second plies 14 arranged in any desired fashion, optionally along with one or more other plies. For example, hybrid composite laminate 10 may be formed by alternating first plies 12 and second plies 14. In other examples, hybrid composite laminate 10 may be formed by stacking two or more first plies 12, followed by two or more second plies 14, or vice versa. One or more plies 12, 14 may be placed in a different orientation or alignment than one or more other of plies 12, 14 in a given hybrid composite laminate 10, such that hybrid composite laminate 10 may be formed of interleaved plies 12 and 14 with various angles of fiber directions. In some hybrid composite laminates 10, at least one second ply 14 may be interspersed among a plurality of stacked first plies 12, and/or at least one first ply 12 may be interspersed among a plurality of stacked second plies 14.

In various examples of hybrid composite laminate 10, second plies 14 formed of slit tapes 16 may be placed anywhere throughout a thickness 32 of hybrid composite laminate 10, including placing partial layers of slit tapes 16 amongst layers of first plies 12. In other words, slit tapes 16 may be inserted locally into portions or sections of hybrid composite laminate 10, and need not extend the entire width or length of fist ply or plies 12 and/or the entire width or length of hybrid composite laminate 10. In this manner, stiffness can be added to or decreased in different sections or localized areas of hybrid composite laminate 10 via incorporation of different numbers of layers and/or slit tapes 16 in the different sections or localized areas of hybrid composite laminate 10. Similarly, braided composite layers forming first plies 12 can be arranged at any angle or fiber orientation, and placed at any location throughout thickness 32 of hybrid composite laminate 10. Braided composite layers forming first plies 12 can also be any desired stiffness or thickness and may vary from layer to layer (e.g., one first ply 12 may have a different stiffness and/or thickness and/or fiber material than a second first ply 12 within the same hybrid composite laminate 10). In various examples, first plies 12 and second plies 14 may be positioned anywhere with respect to the overall hybrid composite laminate 10. Specifically, first plies 12 may be positioned as outer layers, upper layers, middle layers, and/or lower layers of hybrid composite laminate 10, and second plies 14 also may be positioned as outer layers, upper layers, middle layers, and/or lower layers of hybrid composite laminate 10.

Each first ply 12 and/or second ply 14 of disclosed hybrid composite laminates 10 can be varied in length, width, thickness, stiffness, material, and/or fiber orientation. In some examples of hybrid composite laminate 10, each first ply 12 may be substantially uniform. In other examples of hybrid composite laminate 10, one or more first plies 12 may be varied from one or more other first plies 12 of hybrid composite laminate 10 in terms of length, width, thickness, stiffness, material, and/or fiber orientation. Similarly, in some examples of hybrid composite laminate 10, each second ply 14 may be substantially uniform. In other examples of hybrid composite laminate 10, one or more second plies 14 may be varied from one or more other second plies 14 of hybrid composite laminate 10 in terms of length, width, thickness, stiffness, material, fiber orientation, number of slit tapes 16 forming second ply 14, and/or the spacing between the slit tapes 16 forming second ply 14. In various examples of hybrid composite laminate 10, the per ply thickness, tow width, and/or fiber stiffness can be different for one or more of the first plies 12 and/or one or more of the second plies 14 making up the hybrid composite laminate 10.

The slit tapes 16 forming each second ply 14 are generally aligned to follow one or more curves of hybrid composite laminate 10, one or more curves of the mold or tooling used to consolidate hybrid composite laminate 10, and/or one or more curves of the final resulting composite part after consolidation. For example, each respective slit tape 16 may be steered to follow a respective part axis, contour line, and/or curve of said hybrid composite laminate 10 and/or of said mold, tooling, or resulting composite part.

Fig. 3 schematically represents a cross-sectional view of a specific example of hybrid composite laminate 10, in which two first plies 12 sandwich a number of other layers in between. Namely, a top first ply 12 placed in a first orientation is followed by a subsequent first ply 12' in a second orientation, followed by two layers of second ply 14, another layer of first ply 12' in the second orientation, and finally a bottom first ply 12 is placed again in the first orientation. Fig. 3 shows only an illustrative example and does not limit hybrid composite laminates 10 to this particular number of layers/plies, or this particular arrangement, order, or orientation of plies 12, 14.

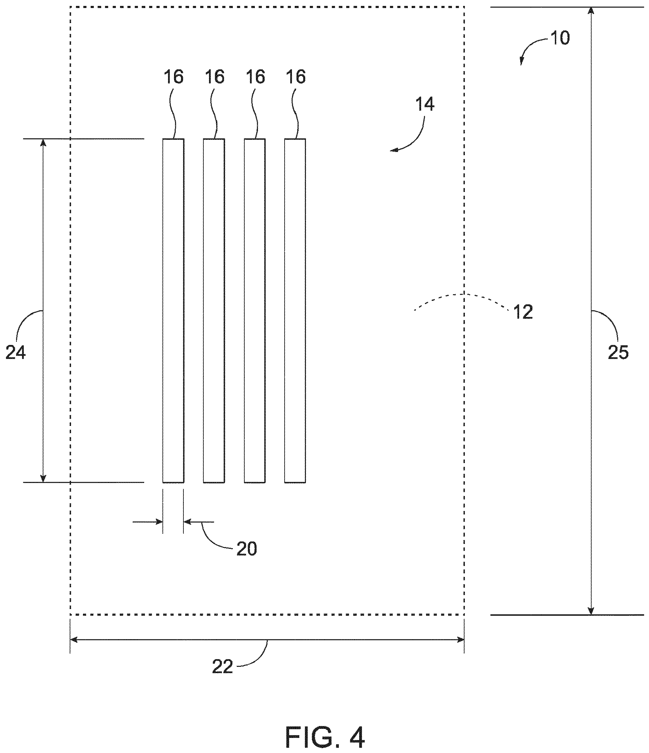

Each second ply 14 of hybrid composite laminate 10 is made up of a plurality of slit tapes 16 (see Fig. 4), which generally will be steered unidirectional composite slit tapes. Each slit tape 16 of a given second ply 14 is arranged and aligned adjacent to one another as desired for a given hybrid composite laminate 10. Generally, slit tapes 16 will be arranged and aligned with respect to one another such that they are non-overlapping and non-intersecting in a given second ply 14. For example, Fig. 4 schematically represents a top plan view of an example of second ply 14, showing a plurality of slit tapes 16 arranged and aligned with respect to each other. The schematic representation of Fig. 4 illustrates slit tapes 16 as being at least substantially parallel to one another and adjacent slit tapes 16 being spaced apart from one another. In various examples of second ply 14, adjacent slit tapes 16 may be closer together (or even touching each other), or adjacent slit tapes 16 may be arranged to be more spaced apart from each other. Of course, various examples of second ply 14 may include more or fewer slit tapes 16 forming the second ply 14.

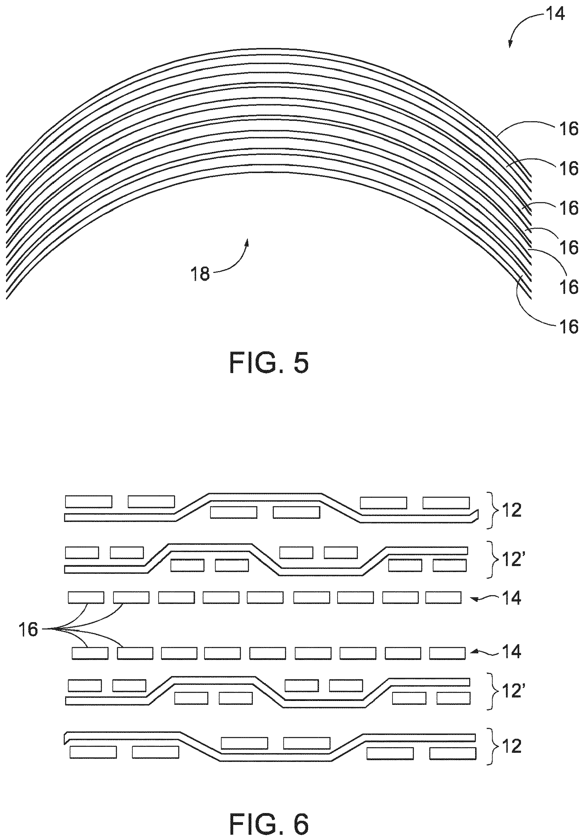

Slit tapes 16 may be aligned along a respective contour line, axis, and/or radius of curvature of hybrid composite laminate 10. For example, Fig. 5 schematically represents an example of second ply 14 formed from a plurality of slit tapes 16 arranged and aligned next to one another such that each slit tape 16 follows a curved shape 18. In some examples, each slit tape 16 is arranged and aligned along a respective tape path that corresponds to a respective part axis or contour line of a composite part formed from hybrid composite laminate 10. Each layer of hybrid composite laminate 10 (e.g., each first ply 12 and each second ply 14) may have a shape corresponding to the shape of a curved composite structure. For example, hybrid composite laminate 10 may be curved, such that a resulting composite part formed by consolidating hybrid composite laminate 10 also is curved, though hybrid composite laminates 10 disclosed herein are not limited to curved parts. Each respective slit tape 16 may be aligned along a part axis or arc of hybrid composite laminate 10, and/or along a curve or contour of hybrid composite laminate 10. Unidirectional slit tapes 16 may be provided in a straight form, and steered to follow a desired contour or curve and thereby form second ply 14 within hybrid composite laminate 10 (or may be steered directly onto a mold to form the first layer in a given hybrid composite laminate 10). In some examples, at least one slit tape 16 is aligned along a first curve or contour of hybrid composite laminate 10, while at least one other slit tape 16 is aligned along a second curve or contour of hybrid composite laminate 10. Additionally or alternatively, slit tapes 16 may be positioned in different planes of a three dimensional hybrid composite laminate 10.

Advantageously, presently disclosed composite laminates 10 may enable stronger resulting thermoplastic composite parts with fewer wrinkles and/or fewer layers than conventional techniques. In some examples, the braided composite layers forming first plies 12 may be dry (unimpregnated) fiber material which is then later infused with a thermoset or thermoplastic resin. Braiding thermoset "prepreg" (preimpregnated) tape is generally not practical due to the tack of the prepreg material. In some examples, hybrid composite laminates 10 are predominantly formed of first plies 12 of braided composite layers, with only a few second plies 14 of unidirectional slit tapes included to increase directional stiffness. By contrast, prior art woven (as opposed to braided) may be included in layups consisting of predominantly unidirectional tapes, usually with the woven layers serving as surface plies to aid with drill break-out or bonding to an adjacent part.

With reference to Fig. 4, each slit tape 16 may have a respective tape width 20. In some examples, the respective tape width 20 may be substantially uniform for each slit tape 16 in a given second ply 14 layer. In other examples, one second ply 14 may contain slit tapes 16 having varying tape widths 20 (e.g., two or more different tape widths 20 may be used to form a single layer of second ply 14). Tape width 20 may be less than a braided layer width 22 of a respective first ply 12. For example, Fig. 4 shows first ply 12 underlying second ply 14 formed from a plurality of slit tapes 16, which illustrates that tape width 20 of each slit tape 16 may be less than braided layer width 22 of first ply 12. In various examples of hybrid composite laminate 10, tape width 20 of one or more slit tapes 16 may be less than 50% of braided layer width 22 of one or more first plies 12 of hybrid composite laminate 10, less than 40% of braided layer width 22, less than 30% of braided layer width 22, less than 20% of braided layer width 22, and/or less than 10% of braided layer width 22. In absolute terms, tape width 20 of one or more slit tapes 16 of a given hybrid composite laminate 10 may be less than 4 inches, less than 3 inches, less than 2 inches, less than 1 inch, less than 0.5 inches, and/or less than 0.25 inches.

Each respective slit tape 16 also has a respective tape length 24, which may be greater than, substantially equal to, or less than an overall length 25 of hybrid composite laminate 10, as shown in Fig. 4. The respective tape length 24 of each slit tape 16 may be substantially the same among some or all of slit tapes 16 in a given second ply 14 of hybrid composite laminate 10, or the respective tape length 24 of one or more slit tapes 16 may vary from the respective tape length 24 of one or more other slit tapes 16 in a given second ply 14 or hybrid composite laminate 10. In some examples, hybrid composite laminate 10 includes one or more second plies 14 locally inserted among a plurality of first plies 12, such that each second ply 14 forms a partial layer of hybrid composite laminate 10.

Placement and layering of first plies 12 and/or second plies 14 may be designed to create localized, or concentrated, areas of stiffness within hybrid composite laminate 10. Thereby, hybrid composite laminate 10 may include one or more areas of increased stiffness as compared to one or more other areas of the hybrid composite laminate 10. These areas of increased stiffness or reinforcement may be created by layering extra slit tapes 16, increasing the number of second plies 14, and/or increasing the number of first plies 12 in a localized area of hybrid composite laminate 10.

Once hybrid composite laminate 10 is consolidated and cured, it results in a composite part that includes both braided composite layers (e.g., one or more first plies 12) and unidirectional steered slit tapes (e.g., one or more second plies 14). Such resulting composite parts may be utilized in any desired industry. In some examples, disclosed methods and hybrid composite laminates 10 may be used to form composite parts in the form of a stringer or fuselage frame for an aircraft. Additionally or alternatively, hybrid composite laminates 10 may be stamp-formed to three-dimensional shapes with one or more curves along the length of the shape, such as curved structural channels, beams, stringers, stiffeners, or flanges. In some specific examples, such curved structures may have a hat-shaped cross-sectional area, and/or may have a cross-sectional area that is defined by a web and one or more flanges extending from one or both sides of the web. Said flanges may be substantially parallel to one another, and/or may be angled with respect to one another. Said web may be substantially perpendicular to one or more of the flanges, or may be angled at a non-perpendicular and non-parallel angle with respect to one or more of the flanges. In some examples, one or more flanges may be curved such that they join the web via an arc.

Braided composite layers used to form first ply 12 and/or slit tapes 16 used to form second ply 14 may be thermoplastic composite materials in some examples. Additionally or alternatively, braided composite layers used to form first ply 12 and/or slit tapes 16 used to form second ply 14 may be pre-impregnated composite materials. Braided composite layers and/or unidirectional slit tapes 16 may be composites formed from a variety of resin matrices and fibers. For example, such materials may include resins such as polypropylene-, polyamide 6- (PA6), polyethylene terephthalate- (PET), polyetherimide- (PEI), and/or polyether ether ketone-based (PEEK) resins, and suitable fibers may include carbon fibers, glass fibers (e.g., fiberglass), basalt fibers, silicon carbide fibers, aramid fibers, and/or flax fibers.

Fig. 6 schematically represents a cross-sectional view of an example of hybrid composite laminate 10, viewed along the longitudinal axis of hybrid composite laminate 10. In this example, hybrid composite laminate 10 includes two second plies 14, each formed of a plurality of slit tapes 16 arranged side-by-side adjacent to one another in a non-overlapping fashion, as shown in Fig. 6. These second plies 14 are sandwiched between first plies 12, 12' on either side of second plies 14.

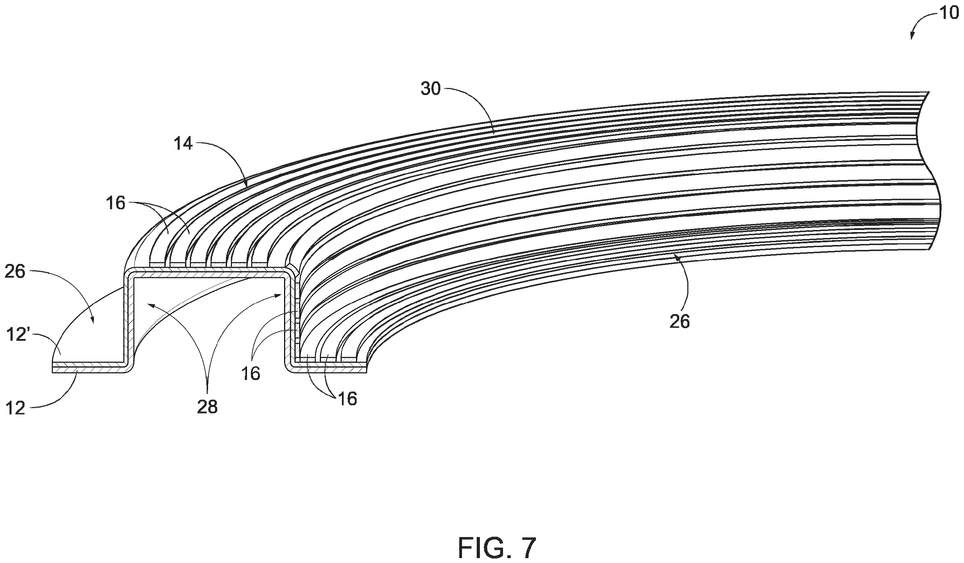

Turning now to Fig. 7, an illustrative non-exclusive example of hybrid composite laminate 10 is shown in a perspective view. Where appropriate, the reference numerals from the schematic illustrations of Figs. 2-6 are used to designate corresponding parts in Fig. 7; however, the example of Fig. 7 is non-exclusive and does not limit hybrid composite laminates 10 to the illustrated example of Fig. 7. That is, hybrid composite laminates 10 are not limited to the specific example illustrated in Fig. 7 and may incorporate any number of the various aspects, configurations, characteristics, properties, etc. that are illustrated in and discussed with reference to the schematic representations of Figs. 2-6 and/or the example of Fig. 7, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again in Fig. 7; however, it is within the scope of the present disclosure that the previously discussed features, variants, etc. may be utilized with the illustrated example of hybrid composite laminate 10.

Fig. 7 illustrates an example of hybrid composite laminate 10 that includes first ply 12, a subsequent first ply 12', and second ply 14 formed by a plurality of steered slit tapes 16 arranged and aligned with respect to each other in a non-overlapping manner, and placed on subsequent first ply 12'. In this example, first ply 12 and subsequent first ply 12' are oriented at different angles with respect to one another. Hybrid composite laminate 10 also may include additional first plies 12 on second ply 14, such that second ply 14 may be sandwiched between one or more first plies 12 on either side of second ply 14. Additionally or alternatively, hybrid composite laminate 10 may include one or more additional second plies 14, but only these three layers are shown in Fig. 7, for clarity.

In the example of Fig. 7, hybrid composite laminate 10 is shown in the form of a curved hat stringer for an aircraft. In this example, hybrid composite laminate 10 includes two flanges 26, two vertical sides 28, and a horizontal side 30. Again, this example is for illustrative purposes, and other examples of hybrid composite laminate 10 may have more or fewer flanges 26, more or fewer vertical sides 28, more or fewer horizontal sides 30, and/or other sides or surfaces arranged at other angles. Hybrid composite laminate 10 may include at least one slit tape 16 positioned on one or more flanges 26, at least one slit tape 16 positioned on one or more vertical sides 28, and/or at least one slit tape 16 positioned on one or more horizontal sides 30. In the example of Fig. 7, hybrid composite laminate 10 includes a second ply 14 formed from three slit tapes 16 on one flange 26, four slit tapes 16 on one vertical side 28, six slit tapes 16 on one horizontal side 30, and one slit tape 16 on a corner region of hybrid composite laminate 10 between horizontal side 30 and vertical side 28. Other examples of hybrid composite laminate 10 may include more or fewer slit tapes 16 on one or both flanges 26, more or fewer slit tapes 16 on one or both vertical sides 28, and/or more or fewer slit tapes 16 on horizontal side 30. In various examples of hybrid composite laminate 10, some or all of slit tapes 16 may be wider or narrower, closer together, and/or spaced further apart from one another.

Framed another way, hybrid composite laminate 10 may be said to have at least one slit tape 16 positioned in a first plane (e.g., a first plane defined by flange 26), at least one slit tape 16 positioned in a second plane (e.g., a second plane defined by vertical side 28), and/or at least one slit tape 16 positioned in a third plane (e.g., a third plane defined by horizontal side 30). One or more planes in which slit tapes 16 are arranged and positioned may intersect one another (e.g., be oriented at a non-parallel angle with respect to one another). For example, the second plane intersects the first plane and the third plane in the example of Fig. 7. Additionally or alternatively, one or more planes in which slit tapes 16 are arranged and positioned may be substantially parallel to one another. For example, the first plane and the third plane are parallel to one another in the example of Fig. 7. Slit tapes 16 may be positioned and arranged in one or more planes that are parallel, perpendicular, intersecting, and/or at a non-perpendicular and non-parallel angle to one another.

Slit tapes 16 may be steered when applied to form second ply 14 in a given hybrid composite laminate 10. In some examples, slit tapes 16 may be arranged and aligned (e.g., positioned on an underlying first ply 12 of braided composite material) via an automated pick-and-place system or automated fiber placement machine. Additionally or alternatively, slit tapes 16 may be arranged and aligned manually.

In the example shown in Fig. 7, slit tapes 16 are steered to follow the contour lines of the curved final shape of the composite part that results from consolidating hybrid composite laminate 10. The placement and arrangement of these steered slit tapes 16 along the part axis, curve, and/or contour line of hybrid composite laminate 10 (or resulting composite part) can reduce wrinkling when laying up such complex composite structures. The disclosed methods and systems allow for the inclusion of unidirectional slit tapes 16 along the curve(s) of the resulting composite part. Such placement of the steered unidirectional slit tapes 16 can improve the strength and/or stiffness of the resulting composite part, as compared to composite parts made without hybrid composite laminate 10 having both braided composite layers and unidirectional steered slit tapes. At the same time, such hybrid composite laminates 10 according to the present disclosure may reduce the thickness and/or weight in the resulting composite part, as the desired strength and other structural properties may be able to be achieved with fewer numbers of plies than is possible with conventional layups. Fewer layers can in turn reduce the lay-up or processing time needed to manufacture the resulting composite part, and can also optimize localized strength and reinforcement in desired areas (e.g., along the part axis of curved geometries) of the resulting composite part.

Illustrative, non-exclusive examples of inventive subject matter according to the present disclosure are described in the following enumerated paragraphs:
A1. A method, comprising:
   providing at least one braided composite layer configured to form a first ply;
   arranging and aligning a plurality of slit tapes such that each slit tape of the plurality of slit tapes (16) is adjacent to one another and non-overlapping, thereby forming a second ply, wherein each slit tape of the plurality of slit tapes comprises a steered unidirectional composite slit tape; and
   forming a hybrid composite laminate by stacking a plurality of plies, wherein the plurality of plies comprises the first ply and the second ply.
   A1.1. The method of paragraph A1, wherein the arranging and aligning the plurality of slit tapes comprises aligning each respective slit tape along a respective contour line, axis, and/or radius of curvature of one or more of: the hybrid composite laminate, a tooling used to form a composite part from the hybrid composite laminate, a mold used to form the composite part, and the composite part.
   A1.2. The method of paragraph A1 or A1.1, wherein the arranging and aligning the plurality of slit tapes comprises arranging and aligning each respective slit tape along a respective tape path that corresponds to a respective contour line of a/the composite part formed from the hybrid composite laminate.
A2. The method of any of paragraphs A1-A1.2, wherein the plurality of plies comprises a plurality of first plies formed from a plurality of braided composite layers.
A3. The method of any of paragraphs A1-A2, wherein the plurality of plies comprises a plurality of second plies, wherein each respective second ply of the plurality of second plies comprises a respective plurality of slit tapes arranged and aligned adjacent to one another.
A4. The method of any of paragraphs A1-A3, wherein the hybrid composite laminate is curved, such that a resulting composite part formed by consolidating the hybrid composite laminate also is curved.
A5. The method of any of paragraphs A1-A4, further comprising forming the at least one braided composite layer.
A6. The method of paragraph A5, wherein the forming the at least one braided composite layer comprises:
   braiding a plurality of fiber tows to form a braided tube; and
   cutting the braided tube to form the at least one braided composite layer.
A7. The method of paragraph A6, wherein the cutting the braided tube comprises cutting the braided tube into two hemispheres, and flattening each respective hemisphere to form a respective braided composite layer.
A7.1. The method of paragraph A6 or A7, wherein the braided tube has a circular, square, elliptical, polygonal, or rectangular cross-section.
A8. The method any of paragraphs A1-A7.1, further comprising forming the plurality of slit tapes.
A9. The method any of paragraphs A1-A8, wherein the arranging and aligning the plurality of slit tapes comprises aligning each respective slit tape along a part axis of the hybrid composite laminate.
A10. The method any of paragraphs A1-A9, wherein the arranging and aligning the plurality of slit tapes comprises aligning the plurality of slit tapes along a curve or contour of the hybrid composite laminate.
A11. The method any of paragraphs A1-A10, wherein the arranging and aligning the plurality of slit tapes comprises:
   arranging and aligning at least one slit tape of the plurality of slit tapes along a first curve or contour of the hybrid composite laminate; and
   arranging and aligning at least one slit tape of the plurality of slit tapes along a second curve or contour of the hybrid composite laminate.
A12. The method any of paragraphs A1-A11, wherein the arranging and aligning the plurality of slit tapes comprises:
   arranging and aligning at least one slit tape of the plurality of slit tapes in a first plane; and
   arranging and aligning at least one slit tape of the plurality of slit tapes in a second plane, wherein the second plane intersects the first plane.
A13. The method any of paragraphs A1-A12, wherein each respective slit tape of the plurality of slit tapes has a respective tape width.
A14. The method of paragraph A13, wherein the respective tape width of each respective slit tape is at least substantially uniform.
A15. The method of paragraph A13 or A14, wherein the at least one braided composite layer has a braided layer width, and wherein the tape width is less than 50% of the braided layer width, less than 40% of the braided layer width, less than 30% of the braided layer width, less than 20% of the braided layer width, and/or less than 10% of the braided layer width.
A16. The method any of paragraphs A1-A15, wherein the forming the hybrid composite laminate comprises alternating layers of the first ply and the second ply.
A17. The method any of paragraphs A1-A16, wherein the forming the hybrid composite laminate comprises positioning at least one second ply interspersed among a plurality of stacked first plies.
A18. The method any of paragraphs A1-A17, wherein the forming the hybrid composite laminate comprises positioning at least one first ply interspersed among a plurality of stacked second plies.
A19. The method any of paragraphs A1-A18, further comprising optimizing reinforcement along a/the part axis of the hybrid composite laminate.
A20. The method any of paragraphs A1-A19, further comprising consolidating the hybrid composite laminate to form a/the composite part.
A20.1. The method of paragraph A20, wherein the consolidating the hybrid composite laminate comprises autoclave consolidation and/or pressing forming.
A21. The method any of paragraphs A1-A20.1, wherein each respective slit tape of the plurality of slit tapes has a respective tape length that is less than an overall length of the hybrid composite laminate.
A22. The method any of paragraphs A1-A21, wherein the forming the hybrid composite laminate by stacking the plurality of plies comprises locally inserting one or more second plies among a plurality of first plies, such that each second ply forms a partial layer of the hybrid composite laminate.
A23. The method any of paragraphs A1-A22, wherein the forming the hybrid composite laminate by stacking the plurality of plies comprises increasing stiffness in one or more respective areas of the hybrid composite laminate via placement of the second ply or a/the plurality of second plies.
A24. The method any of paragraphs A1-A23, wherein the forming the hybrid composite laminate by stacking the plurality of plies comprises:
   layering an initial first ply in a first orientation; and
   layering a subsequent first ply in a second orientation.
A25. The method any of paragraphs A1-A24, wherein the hybrid composite laminate comprises a flange, a vertical side, and a horizontal side, and wherein the arranging and aligning the plurality of slit tapes comprises:
   arranging and aligning at least one slit tape of the plurality of slit tapes on the flange;
   arranging and aligning at least one slit tape of the plurality of slit tapes on the vertical side; and
   arranging and aligning at least one slit tape of the plurality of slit tapes on the horizontal side.
A26. The method any of paragraphs A1-A25, wherein the arranging and aligning the plurality of slit tapes is performed using an automated fiber placement system and/or a pick and place machine.
A27. The method any of paragraphs A1-A26, further comprising:
   draping the hybrid composite laminate onto a mold or tooling; and
   stamp forming a/the composite part.
B1. A hybrid composite laminate, comprising:
   at least one braided composite layer that forms a first ply; and
   a plurality of slit tapes that form a second ply, wherein each slit tape of the plurality of slit tapes comprises a steered unidirectional composite slit tape, wherein each slit tape of the plurality of slit tapes is arranged and aligned adjacent to one another such that they are non-overlapping, and wherein at least one first ply and at least one second ply are stacked together to form the hybrid composite laminate.
B2. The hybrid composite laminate of paragraph B1, wherein each respective slit tape of the plurality of slit tapes is aligned along a respective contour line, axis, and/or radius of curvature of the hybrid composite laminate.
B3. The hybrid composite laminate of any of paragraphs B1-B2, wherein each respective slit tape of the plurality of slit tapes is arranged and aligned along a respective tape path that corresponds to a respective contour line of a composite part formed from the hybrid composite laminate.
B4. The hybrid composite laminate of any of paragraphs B1-B3, wherein the hybrid composite laminate comprises a plurality of first plies formed from a plurality of braided composite layers.
B5. The hybrid composite laminate of any of paragraphs B1-B4, wherein the hybrid composite laminate comprises a plurality of second plies, wherein each respective second ply of the plurality of second plies comprises a respective plurality of slit tapes arranged and aligned adjacent to one another.
B6. The hybrid composite laminate of any of paragraphs B1-B5, wherein the hybrid composite laminate is curved, such that a resulting composite part formed by consolidating the hybrid composite laminate also is curved.
B7. The hybrid composite laminate of any of paragraphs B1-B6, wherein each respective slit tape of the plurality of slit tapes is aligned along a part axis of the hybrid composite laminate.
B8. The hybrid composite laminate of any of paragraphs B1-B7, wherein each respective slit tape of the plurality of slit tapes is aligned along a curve or contour of the hybrid composite laminate.
B9. The hybrid composite laminate of any of paragraphs B1-B8, wherein at least one slit tape of the plurality of slit tapes is aligned along a first curve or contour of the hybrid composite laminate, and further wherein at least one slit tape of the plurality of slit tapes is aligned along a second curve or contour of the hybrid composite laminate.
B10. The hybrid composite laminate of any of paragraphs B1-B9, wherein at least one slit tape of the plurality of slit tapes is positioned in a first plane, and further wherein at least one slit tape of the plurality of slit tapes is positioned in a second plane, wherein the second plane intersects the first plane.
B11. The hybrid composite laminate of any of paragraphs B1 -B10, wherein each respective slit tape of the plurality of slit tapes has a respective tape width.
B12. The hybrid composite laminate of paragraph B11, wherein the respective tape width of each respective slit tape is at least substantially uniform.
B13. The hybrid composite laminate of paragraph B11 or B12, wherein the at least one braided composite layer has a braided layer width, and wherein the tape width is less than 50% of the braided layer width, less than 40% of the braided layer width, less than 30% of the braided layer width, less than 20% of the braided layer width, and/or less than 10% of the braided layer width.
B14. The hybrid composite laminate of any of paragraphs B1-B13, wherein the hybrid composite laminate comprises alternating layers of the first ply and the second ply.
B15. The hybrid composite laminate of any of paragraphs B1-B14, wherein the hybrid composite laminate comprises at least one second ply interspersed among a plurality of stacked first plies.
B16. The hybrid composite laminate of any of paragraphs B1-B15, wherein the hybrid composite laminate comprises at least one first ply interspersed among a plurality of stacked second plies.
B17. The hybrid composite laminate of any of paragraphs B1-B16, wherein each respective slit tape of the plurality of slit tapes has a respective tape length that is less than an overall length of the hybrid composite laminate.
B18. The hybrid composite laminate of any of paragraphs B1-B17, wherein the hybrid composite laminate comprises one or more second plies locally inserted among a plurality of first plies, such that each second ply forms a partial layer of the hybrid composite laminate.
B19. The hybrid composite laminate of any of paragraphs B1-B18, wherein the hybrid composite laminate comprises one or more areas of increased stiffness as compared to one or more other areas of the hybrid composite laminate.
B20. The hybrid composite laminate of any of paragraphs B1-B19, wherein the hybrid composite laminate comprises:
   an initial first ply in a first orientation; and
   a subsequent first ply in a second orientation.
B21. The hybrid composite laminate of any of paragraphs B1-B20, wherein the hybrid composite laminate comprises a flange, a vertical side, and a horizontal side, and wherein the hybrid composite laminate comprises:
   at least one slit tape of the plurality of slit tapes positioned on the flange;
   at least one slit tape of the plurality of slit tapes positioned on the vertical side; and
   at least one slit tape of the plurality of slit tapes positioned on the horizontal side.
B22. The hybrid composite laminate of any of paragraphs B1-B21, wherein the hybrid composite laminate is made according to the method of any of paragraphs A1-A27.
C1. A composite part formed by consolidating the hybrid composite laminate of any of paragraphs B1-B22.
C2. The composite part of paragraph C1, wherein the composite part comprises a stringer or fuselage frame for an aircraft.
C3. An aircraft comprising the composite part of paragraph C1 or C2.
D1. The use of the hybrid composite laminate of any of paragraphs B1-B22 to form a composite part, an aircraft part, a stringer, and/or a fuselage frame for an aircraft.

As used herein, the terms "selective" and "selectively," when modifying an action, movement, configuration, or other activity of one or more components or characteristics of an apparatus, mean that the specific action, movement, configuration, or other activity is a direct or indirect result of dynamic processes and/or user manipulation of an aspect of, or one or more components of, the apparatus. The terms "selective" and "selectively" thus may characterize an activity that is a direct or indirect result of user manipulation of an aspect of, or one or more components of, the apparatus, or may characterize a process that occurs automatically, such as via the mechanisms disclosed herein.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" may mean A alone, B alone, C alone, A and B together, A and C together, B and C together, or A, B, and C together, and optionally any of the above in combination with at least one other entity.

As used herein, the phrase "at least substantially," when modifying a degree or relationship, includes not only the recited "substantial" degree or relationship, but also the full extent of the recited degree or relationship. A substantial amount of a recited degree or relationship may include at least 75% of the recited degree or relationship. For example, a first direction that is at least substantially parallel to a second direction includes a first direction that is within an angular deviation of 22.5° relative to the second direction and also includes a first direction that is identical to the second direction.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

As used herein, the phrase, "for example," the phrase, "as an example," and/or simply the term "example," when used with reference to one or more components, features, details, structures, examples, and/or methods according to the present disclosure, are intended to convey that the described component, feature, detail, structure, example, and/or method is an illustrative, non-exclusive example of components, features, details, structures, examples, and/or methods according to the present disclosure. Thus, the described component, feature, detail, structure, example, and/or method is not intended to be limiting, required, or exclusive/exhaustive; and other components, features, details, structures, examples, and/or methods, including structurally and/or functionally similar and/or equivalent components, features, details, structures, examples, and/or methods, are also within the scope of the present disclosure.

## Claims

1. A method (100), comprising:
providing (102) at least one braided composite layer configured to form a first ply;
arranging and aligning (104) a plurality of slit tapes such that each slit tape of the plurality of slit tapes is adjacent to one another and non-overlapping, thereby forming a second ply, wherein each slit tape of the plurality of slit tapes comprises a steered unidirectional composite slit tape; and
forming a (106) hybrid composite laminate by stacking a plurality of plies, wherein the plurality of plies comprises the first ply and the second ply.

2. The method (100) according to claim 1, wherein the arranging and aligning (104) the plurality of slit tapes comprises aligning each respective slit tape along a respective contour line, axis, and/or radius of curvature of the hybrid composite laminate.

3. The method (100) according to claim 1 or 2, wherein the arranging and aligning (104) the plurality of slit tapes comprises arranging and aligning each respective slit tape along a respective tape path that corresponds to a respective contour line of a composite part formed from the hybrid composite laminate.

4. The method (100) according to any of claims 1 - 3, further comprising forming (110) the at least one braided composite layer, wherein the forming the at least one braided composite layer comprises:
braiding a plurality of fiber tows to form a braided tube; and
cutting the braided tube to form the at least one braided composite layer.

5. The method (100) according to any of claims 1 - 4, wherein the arranging and aligning (104) the plurality of slit tapes comprises:
arranging and aligning at least one slit tape of the plurality of slit tapes along a first curve or contour of the hybrid composite laminate; and
arranging and aligning at least one slit tape of the plurality of slit tapes along a second curve or contour of the hybrid composite laminate.

6. The method (100) according to any of claims 1 - 5, wherein the arranging and aligning (104) the plurality of slit tapes comprises:
arranging and aligning at least one slit tape of the plurality of slit tapes in a first plane; and
arranging and aligning at least one slit tape of the plurality of slit tapes in a second plane, wherein the second plane intersects the first plane.

7. The method (100) according to any of claims 1 - 6, wherein the forming (106) the hybrid composite laminate comprises positioning at least one second ply interspersed among a plurality of stacked first plies.

8. The method (100) according to any of claims 1 - 7, wherein the forming (106) the hybrid composite laminate by stacking the plurality of plies comprises locally inserting one or more second plies among a plurality of first plies, such that each second ply forms a partial layer of the hybrid composite laminate.

9. The method (100) according to any of claims 1 - 10, further comprising consolidating (108) the hybrid composite laminate, optionally comprising:
draping the hybrid composite laminate onto a mold or tooling; and
stamp forming a composite part.

10. A hybrid composite laminate (10), comprising:
at least one braided composite layer that forms a first ply (12,12'); and
a plurality of slit tapes (16) that form a second ply (14), wherein each slit tape (16) of the plurality of slit tapes (16) comprises a steered unidirectional composite slit tape, wherein each slit tape (16) of the plurality of slit tapes (16) is arranged and aligned adjacent to one another such that they are non-overlapping, and wherein at least one first ply (12,12') and at least one second ply (14) are stacked together to form the hybrid composite laminate (10).

11. The hybrid composite laminate (10) according to claim 10, wherein each respective slit tape (16) of the plurality of slit tapes (16) is arranged and aligned along a respective tape path that corresponds to a respective contour line of a composite part formed from the hybrid composite laminate.

12. The hybrid composite laminate (10) according to any of claims 10 - 11, wherein the hybrid composite laminate (10) comprises:
a plurality of first plies (12,12') formed from a plurality of braided composite layers; and
a plurality of second plies (14), wherein each respective second ply (14) of the plurality of second plies (14) comprises a respective plurality of slit tapes (16) arranged and aligned adjacent to one another, wherein each respective slit tape (16) of the plurality of slit tapes (16) has a respective tape width (20), wherein each respective braided composite layer of the plurality of braided composite layers has a respective braided layer width (22), and wherein each respective tape width (20) is less than 50% of each respective braided layer width (22).

13. The hybrid composite laminate (10) according to any of claims 10 - 12, wherein at least one slit tape (16) of the plurality of slit tapes (16) is aligned along a first curve or contour of the hybrid composite laminate (10), and further wherein at least one other slit tape (16) of the plurality of slit tapes (16) is aligned along a second curve or contour of the hybrid composite laminate (10).

14. The hybrid composite laminate (10) according to any of claims 10 - 13, wherein the hybrid composite laminate (10) comprises:
an initial first ply (12) in a first orientation;
a subsequent first ply (12') in a second orientation; and
at least one second ply (14) interspersed among a plurality of stacked first plies (12, 12').

15. A composite part formed by consolidating the hybrid composite laminate (10) according to any of claims 10 - 14.
